# FASCICULE DE BREVET EUROPEEN

(11) **EP 3 253 594 B1**
(45) Date de publication et mention de la délivrance du brevet: **13.05.2020**
(21) Numéro de dépôt: 16701184.0
(22) Date de dépôt: 22.01.2016
(51) Int. Cl.: B60C 9/00, B60C 9/20

(54) **PNEU RADIAL AYANT UNE STRUCTURE DE CEINTURE AMELIORÉE**
RADIALREIFEN MIT VERBESSERTER GÜRTELSTRUKTUR
RADIAL TYRE HAVING AN IMPROVED BELT STRUCTURE

(30) Priorité: 03.02.2015 FR 1550816
(43) Date de publication de la demande: 13.12.2017
(73) Titulaire: Compagnie Générale des Etablissements Michelin, 63000 Clermont-Ferrand (FR)
(72) Inventeur: ASTAIX, Camille, 63040 Clermont-Ferrand Cedex 9 (FR); LARDJANE, Aurore, 63040 Clermont-Ferrand Cedex 9 (FR)
(74) Mandataire: Louret, Sylvain
(86) Numéro de dépôt international: PCT/EP2016/051310
(87) Numéro de publication internationale: WO 2016/124423

(56) Documents cités:
- EP-A2- 1 048 487
- WO-A1-2013/117476
- WO-A1-2013/117477

## Description

### 1. DOMAINE DE L'INVENTION

La présente invention est relative aux pneumatiques pour véhicules, et à leur armature de sommet ou ceinture. Elle se rapporte plus particulièrement aux stratifiés composites multicouche utilisés dans la ceinture de tels pneumatiques notamment pour véhicule tourisme ou camionnette.

### 2. ETAT DE LA TECHNIQUE

Un pneumatique à armature de carcasse radiale pour véhicule tourisme ou camionnette comporte, on le sait, une bande de roulement, deux bourrelets inextensibles, deux flancs souples reliant les bourrelets à la bande de roulement et une armature de sommet rigide ou « ceinture » (*"belt"*) disposée circonférentiellement entre l'armature de carcasse et la bande de roulement.

La ceinture de pneumatique est généralement constituée par au moins deux nappes de caoutchouc dites « nappes de travail », « nappes de triangulation » ou encore « armature de travail », superposées et croisées, renforcées le plus souvent de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au pneu une rigidité ou poussée de dérive (en anglais, "*drift thrust*" ou "*cornering*") élevée, nécessaire de manière connue pour l'obtention d'un bon comportement routier (*"handling"*) sur véhicule automobile.

La ceinture ci-dessus, ce qui est particulièrement le cas pour les pneumatiques susceptibles de rouler à haute vitesse de manière soutenue, peut comporter en outre une nappe de caoutchouc additionnelle au-dessus des nappes de travail (côté bande de roulement), dite « nappe de frettage » ou « armature de frettage », qui est renforcée généralement par des fils de renforcement dits « circonférentiels », c'est-à-dire que ces fils de renforcement sont disposés pratiquement parallèles les uns aux autres et s'étendent sensiblement circonférentiellement autour de l'enveloppe pneumatique de manière à former un angle préférentiellement compris dans un domaine de -5° à +5° avec le plan circonférentiel médian. Ces fils de renforcement circonférentiels ont pour fonction première, on le rappelle, de résister à la centrifugation du sommet à haute vitesse.

De telles structures de ceintures, consistant finalement en un stratifié composite multicouche comportant au moins une nappe de frettage, le plus souvent textile, et deux nappes de travail généralement métalliques, sont bien connues de l'homme du métier et ne nécessitent pas d'être décrites ici plus en détail.

L'état de la technique général décrivant de telles structures de ceintures est illustré en particulier par les documents brevet US 4 371 025, FR 2 504 067 ou US 4 819 705, EP 738 615, EP 795 426 ou US 5 858 137, EP 1 162 086 ou US 2002/0011296, EP 1 184 203 ou US 2002/0055583.

La disponibilité en aciers de plus en plus résistants et endurants fait que les manufacturiers de pneumatiques s'orientent aujourd'hui, autant que possible, vers l'emploi dans les ceintures de pneumatiques de câbles à structure très simple, notamment à seulement deux fils, voire même de filaments unitaires, afin d'une part de simplifier la fabrication et diminuer les coûts, d'autre part de diminuer l'épaisseur des nappes de renforcement et ainsi l'hystérèse des pneumatiques, en fin de compte réduire la consommation d'énergie des véhicules équipés de tels pneumatiques.

Les efforts visant à réduire la masse des pneumatiques, en particulier par une réduction d'épaisseur de leur ceinture et des couches de caoutchouc la constituant, se heurtent toutefois, bien naturellement, à des limites physiques qui peuvent donner lieu à un certain nombre de difficultés. Il peut notamment se produire que la fonction de frettage apportée par l'armature de frettage et celle de rigidification apportée par l'armature de travail ne soient plus suffisamment différenciées l'une de l'autre et puissent se perturber mutuellement. Ceci est préjudiciable au bon fonctionnement du sommet du pneumatique, à la performance et l'endurance globale du pneumatique.

C'est ainsi que les demandes de brevet WO 2013/117476 et WO 2013/117477 déposées par les Demanderesses ont proposé un stratifié composite multicouche de structure spécifique qui permet d'alléger notablement la ceinture des pneumatiques, et donc d'abaisser leur résistance au roulement, tout en palliant les inconvénients cités ci-dessus.

Ces demandes divulguent un pneumatique radial, définissant trois directions principales, circonférentielle, axiale et radiale, comportant un sommet surmonté d'une bande de roulement, deux flancs, deux bourrelets, chaque flanc reliant chaque bourrelet au sommet, une armature de carcasse ancrée dans chacun des bourrelets et s'étendant dans les flancs et dans le sommet, une armature de sommet ou ceinture s'étendant dans le sommet selon la direction circonférentielle et située radialement entre l'armature de carcasse et la bande de roulement, ladite ceinture comportant un stratifié composite multicouche comportant au moins trois couches superposées de renforts, lesdits renforts étant dans chaque couche unidirectionnels et noyés dans une épaisseur de caoutchouc, avec notamment :
∘ côté bande de roulement, une première couche de caoutchouc comportant une première rangée de renforts, orientés selon un angle alpha de -5 à +5 degrés par rapport à la direction circonférentielle, ces renforts dits premiers renforts étant en matériau textile thermorétractile ;
∘ au contact de la première couche et disposée sous cette dernière, une deuxième couche de caoutchouc comportant une deuxième rangée de renforts, orientés selon un angle beta donné, positif ou négatif, compris entre 10 et 30 degrés par rapport à la direction circonférentielle, ces renforts dits deuxièmes renforts étant des renforts métalliques ;
∘ au contact de la deuxième couche et disposée sous cette dernière, une troisième couche de caoutchouc comportant une troisième rangée de renforts, orientés selon un angle gamma opposé à l'angle beta, lui-même compris entre 10 et 30 degrés par rapport à la direction circonférentielle, ces renforts dits troisièmes renforts étant des renforts métalliques.

Les premiers renforts sont constitués de fibres multifilamentaires, en polyamide ou en polyester, retordues ensemble de manière conventionnelle sous forme de cordes textiles. Les deuxièmes et troisièmes renforts consistent quant à eux en des mono filaments en acier, en particulier en acier au carbone à très haute résistance.

Les demandes de brevet ci-dessus ont démontré qu'il était possible, grâce à la construction spécifique de leur stratifié multicouche, notamment à l'utilisation de renforts circonférentiels textiles dont la thermorétractabilité est contrôlée et de renforts métalliques sous forme de mono fils unitaires de faible diamètre, de réduire de manière notable l'épaisseur globale des ceintures de pneumatiques, et ceci sans nuire à la bonne mise en œuvre et à la différentiation des fonctions d'une part de frettage apportées par les renforts circonférentiels de la première couche, d'autre part de rigidification apportées par les renforts métalliques des deux autres couches.

Ainsi, peuvent être diminués le poids des pneumatiques et leur résistance au roulement, à coût réduit grâce à l'utilisation de monofilaments en acier ne nécessitant aucune opération d'assemblage préalable, ceci sans pénaliser la rigidité de dérive et donc le comportement routier, ni l'endurance globale en roulage.

Toutefois, l'absence de câblage sur les monofilaments en acier de la deuxième couche, les plus exposés aux efforts de compression, fait que ces derniers sont susceptibles de flamber prématurément, comparativement à des câbles usuels, lors de sollicitations très sévères en compression.

Ceci peut être préjudiciable, selon les conditions particulières d'utilisation des pneumatiques, à l'endurance en compression du stratifié multicouche, en particulier si les pneumatiques sont soumis de manière soutenue à des conditions de roulage particulièrement sévères, par exemple sous de très fortes dérives.

### 3. BREVE DESCRIPTION DE L'INVENTION

Poursuivant leurs recherches, les Demanderesses ont mis au point un stratifié composite multicouche amélioré, d'architecture nouvelle, qui répond au problème ci-dessus et qui peut donc constituer une alternative avantageuse aux stratifiés décrits dans les deux demandes précitées, en particulier pour des pneumatiques susceptibles d'être soumis à de telles conditions de roulage particulièrement sévères.

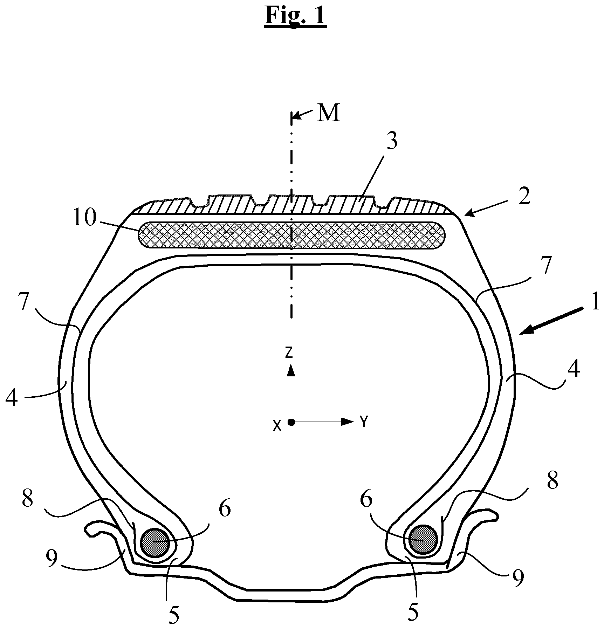

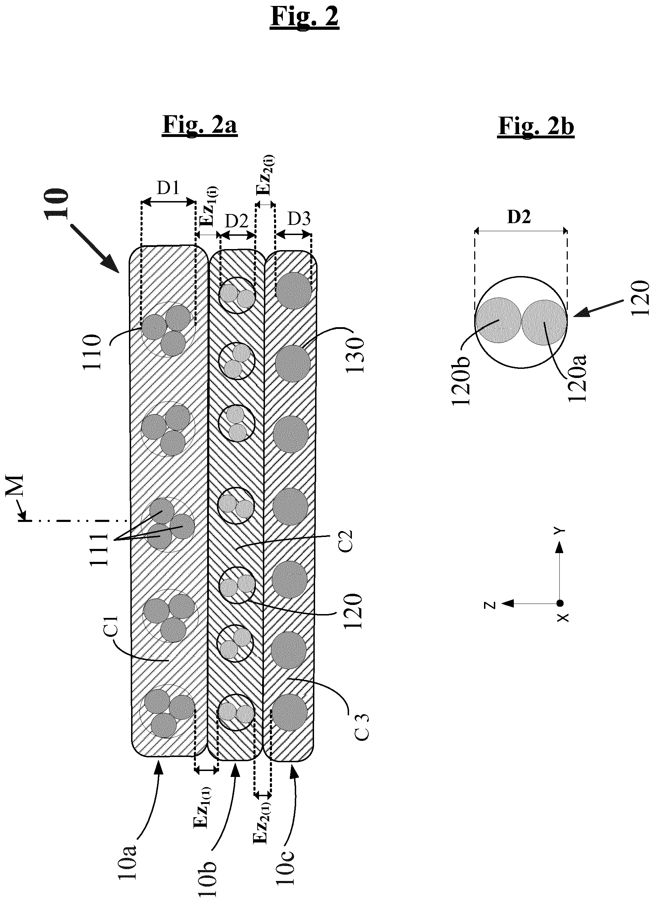

Ainsi, selon un premier objet, la présente invention concerne (selon les références données aux figures 1 et 2 annexées) un pneumatique radial (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) jusqu'au sommet (2), une armature de sommet ou ceinture (10) s'étendant dans le sommet (2) selon la direction circonférentielle (X) et situé radialement entre l'armature de carcasse (7) et la bande de roulement (3), ladite ceinture (10) comportant un stratifié composite multicouche (10a, 10b, 10c) comportant au moins trois couches superposées de renforts (110, 120, 130), lesdits renforts étant dans chaque couche unidirectionnels et noyés dans une épaisseur de caoutchouc (respectivement C1, C2, C3), avec :
∘ côté bande de roulement, une première couche (10a) de caoutchouc (C1) comportant une première rangée de renforts (110), orientés selon un angle alpha de -5 à +5 degrés par rapport à la direction circonférentielle (X), ces renforts (110) dits premiers renforts étant en matériau textile thermorétractile ;
∘ au contact de la première couche (10b) et disposée sous cette dernière, une deuxième couche (10b) de caoutchouc (C2) comportant une deuxième rangée de renforts (120), orientés selon un angle beta donné, positif ou négatif, compris entre 10 et 30 degrés par rapport à la direction circonférentielle (X), ces renforts (120) dits deuxièmes renforts étant des renforts métalliques ;
∘ au contact de la deuxième couche (10b) et disposée sous cette dernière, une troisième couche (10c) de caoutchouc (C3) comportant une troisième rangée de renforts (130), orientés selon un angle gamma opposé à l'angle beta, lui-même compris entre 10 et 30 degrés par rapport à la direction circonférentielle (X), ces renforts (130) dits troisièmes renforts étant des renforts métalliques,
ce pneumatique étant caractérisé en ce que :
∘ tout ou partie des premiers renforts (110) en matériau textile thermorétractile sont des mono filaments de diamètre ou épaisseur ϕ supérieur(e) à 0,10 mm, ou des assemblages de tels mono filaments ;
∘ le diamètre d'encombrement noté D1 des premiers renforts (110) est compris entre 0,20 mm et 1,20 mm ;
∘ tout ou partie des deuxièmes (120) renforts sont des câbles en acier constitués de 2 à 5 monofilaments, le diamètre de ces câbles noté D2 étant compris entre 0,20 mm et 0,70 mm ;
∘ tout ou partie des troisièmes (130) renforts sont des mono fils en acier dont le diamètre ou épaisseur noté(e) D3 est compris(e) dans un domaine de 0,15 à 0,50 mm.

L'utilisation dans la deuxième couche de petits câbles en acier à au moins deux fils, agissant en quelque sorte comme des ressorts, est susceptible d'augmenter l'endurance, grâce à une extensibilité et une tenue en flexion-compression, du stratifié multicouche.

Le problème pouvant se poser toutefois est que l'encombrement de ces câbles à au moins deux fils est susceptible d'augmenter par rapport à un seul monofil unitaire, d'où des risques qui s'accroissent de contacts directs, sinon de trop grande proximité, entre les renforts textiles (110) de la première couche (C1) avec les câbles métalliques (120) de la deuxième couche (C2), si l'on ne veut pas par ailleurs devoir augmenter l'épaisseur des couches de caoutchouc (C1 et/ou C2).

Or, un contact direct ou une trop grande proximité entre les renforts textiles circonférentiels, dont on sait qu'ils contiennent naturellement et sont susceptibles de transporter une certaine quantité d'eau, variable selon la nature du matériau textile thermorétractile, et les petits câbles en acier, pourrait engendrer à terme une corrosion de surface de ces derniers, donc une perte de résistance, sans parler d'un risque de pénaliser l'adhésion avec le caoutchouc environnant, in fine un risque de diminution de l'endurance globale de l'armature de travail après un roulage prolongé des pneumatiques.

Selon l'invention, ces risques de corrosion et de pénalisation de l'adhésion sont réduits grâce à l'emploi de renforts textiles (110) sous forme de monofils de gros diamètre (ϕ supérieur à 0,10 mm) ou d'assemblages de tels mono fils, en lieu et place de cordes textiles à base de fibres multifilamentaires conventionnelles telles que décrites dans les demandes précitées WO 2013/117476 et WO 2013/117477.

Le stratifié composite multicouche selon l'invention est utilisable comme élément de renforcement de ceinture de tout type de pneumatique, particulièrement pour véhicule tourisme incluant notamment les véhicules 4x4 et "SUV" (*Sport Utility Vehicles*) ou pour véhicule camionnette.

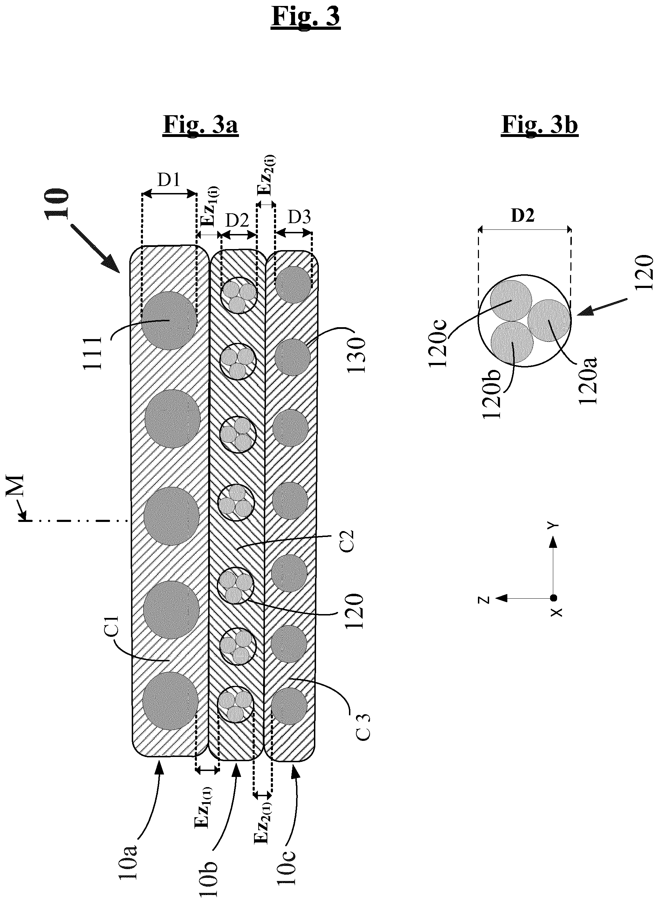

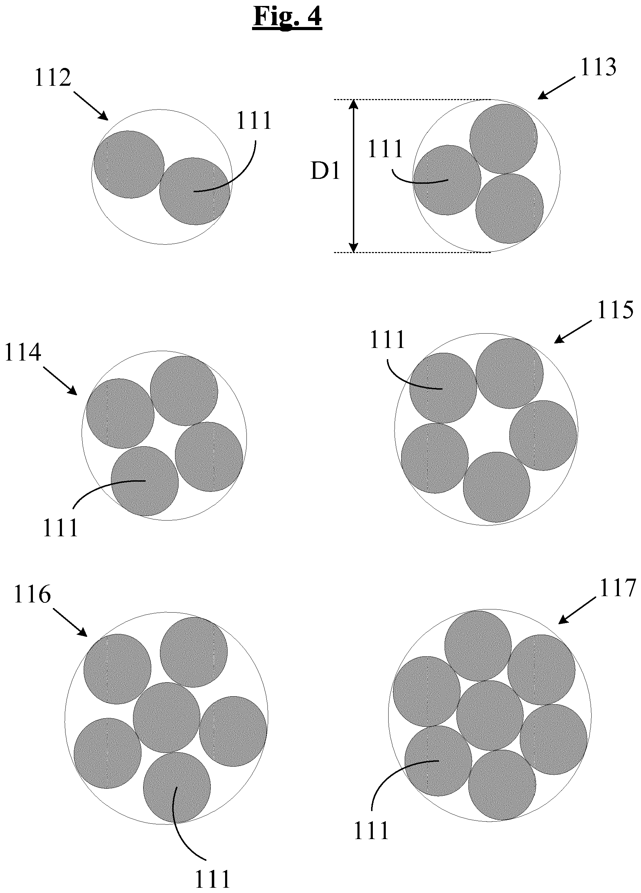

L'invention ainsi que ses avantages seront aisément compris à la lumière de la description détaillée et des exemples de réalisation qui suivent, ainsi que des figures 1 à 4 relatives à ces exemples qui schématisent (sauf indication contraire, sans respect d'une échelle spécifique) :
- en coupe radiale (c'est-à-dire selon un plan contenant l'axe de rotation du pneumatique), un exemple de pneu (1) conforme à l'invention, incorporant dans sa ceinture (10) un stratifié composite multicouche conformément à l'invention (Fig. 1) ;
- en coupe transversale, un exemple de stratifié composite multicouche (10a, 10b, 10c) utilisé dans le pneu (1) conforme à l'invention, incorporant les renforts (110) en matériau textile thermorétractile sous la forme d'un assemblage de monofilaments, des deuxièmes renforts (120) sous la forme de petits câbles à 2 fils en acier, enfin des troisièmes renforts (130) sous la forme de monofils unitaires en acier (Fig. 2 ; Fig. 2a et 2b);
- en coupe transversale, un autre exemple de stratifié composite multicouche (10a, 10b, 10c) utilisé dans le pneu (1) conforme à l'invention, incorporant les renforts (110) en matériau textile thermorétractile sous la forme d'un monofilament unitaire (111), des deuxièmes renforts (120) sous la forme de petits câbles à 3 fils en acier, enfin des troisièmes renforts (130) sous la forme de monofils unitaires en acier (Fig. 3 ; Fig. 3a et 3b) ;
- en coupe transversale, différents exemples possibles d'assemblages de monofilaments (111) en matériau textile thermorétractile, utilisables comme renforts (110) dans la première couche (10a, 20a) du stratifié composite multicouche selon l'invention (Fig. 4).

### 4. DEFINITIONS

Dans la présente demande, on entend par :
- "caoutchouc" ou "élastomère" (les deux termes étant considérés comme synonymes) : tout type d'élastomère, qu'il soit du type diénique ou du type non diénique par exemple thermoplastique ;
- "composition de caoutchouc" ou "composition caoutchouteuse" : une composition qui comporte au moins un caoutchouc et une charge ;
- "couche" : une feuille, bande ou tout autre élément d'épaisseur relativement faible par rapport à ses autres dimensions, de préférence dont le rapport de l'épaisseur sur la plus grande des autres dimensions est inférieur à 0,5, plus préférentiellement inférieur à 0,1 ;
- "direction axiale" : une direction sensiblement parallèle à l'axe de rotation du pneumatique ;
- "direction circonférentielle" : une direction qui est sensiblement perpendiculaire à la fois à la direction axiale et à un rayon du pneumatique (en d'autres termes, tangente à un cercle dont le centre est sur l'axe de rotation du pneumatique) ;
- "direction radiale" : une direction selon un rayon du pneumatique, c'est-à-dire une direction quelconque passant par l'axe de rotation du pneumatique et sensiblement perpendiculairement à cette direction, c'est-à-dire faisant avec une perpendiculaire à cette direction un angle ne s'écartant pas de plus de 5 degrés ;
- "monofilament" ou indistinctement "monofil", de manière générale, tout filament unitaire, quelle que soit la forme de sa section droite, dont le diamètre (cas d'une section droite circulaire) ou l'épaisseur (cas d'une section droite non circulaire) sont supérieurs à 100 µm. Cette définition couvre aussi bien des monofils de forme essentiellement cylindrique (à section droite circulaire) que des mono filaments de forme différente, par exemple des monofilaments oblongs (de forme aplatie), ou de section droite rectangulaire ou carrée ;
- "orienté selon un axe ou une direction" en parlant d'un élément quelconque tel qu'un renfort, un élément qui est orienté sensiblement parallèlement à cet axe ou cette direction, c'est-à-dire faisant avec cet axe ou cette direction un angle ne s'écartant pas de plus de 5 degrés (donc nul ou au plus égal à 5 degrés) ;
- "orienté perpendiculairement à un axe ou une direction" : en parlant d'un élément quelconque tel qu'un renfort, un élément qui est orienté sensiblement perpendiculairement à cet axe ou cette direction, c'est-à-dire faisant avec une perpendiculaire à cet axe ou cette direction un angle ne s'écartant pas de plus de 5 degrés ;
- "plan circonférentiel médian" (noté M) : le plan perpendiculaire à l'axe Y de rotation du pneumatique qui est situé à mi-distance des deux bourrelets et passe par le milieu de l'armature de sommet ou ceinture ;
- "renfort" ou "fil de renforcement" : tout brin long et fin c'est-à-dire filiforme, longiligne, de grande longueur relativement à sa section transversale, notamment tout filament unitaire, toute fibre multifilamentaire ou tout assemblage de tels filaments ou fibres tels qu'un retors ou un câble, ce brin ou fil pouvant être rectiligne comme non rectiligne, par exemple torsadé, ou ondulé, un tel brin ou fil étant susceptible de renforcer une matrice de caoutchouc (c'est-à-dire augmenter les propriétés en traction de la matrice) ;
- "renforts unidirectionnels" : des renforts essentiellement parallèles entre eux, c'est-à-dire orientés selon un même axe ;
- "stratifié" ou "stratifié multicouche" : au sens de la classification internationale des brevets, tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage.

D'autre part, sauf indication expresse différente, tous les pourcentages (%) indiqués sont des % en masse.

L'expression « x et/ou y » signifie « x » ou « y » ou les deux (c'est-à-dire « x et y »). Tout intervalle de valeurs désigné par l'expression « entre a et b » représente le domaine de valeurs allant de plus de « a » à moins de « b » (c'est-à-dire bornes « a » et « b » exclues) tandis que tout intervalle de valeurs désigné par l'expression « de a à b » signifie le domaine de valeurs allant de « a » jusqu'à « b » (c'est-à-dire incluant les bornes strictes « a » et « b »).

### 5. DESCRIPTION DETAILLEE DE L'INVENTION

A titre d'exemple, la figure 1 représente de manière très schématique (c'est-à-dire sans respect d'une échelle spécifique) une coupe radiale d'un pneumatique conforme à l'invention, par exemple pour véhicule du type tourisme ou camionnette, dont la ceinture comporte un stratifié composite multicouche selon l'invention.

Ce pneumatique (1) conforme à l'invention, définissant trois directions perpendiculaires, circonférentielle (X), axiale (Y) et radiale (Z), comporte un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) jusqu'au sommet (2), une armature de sommet ou ceinture (10) s'étendant dans le sommet (2) selon la direction circonférentielle (X) et situé radialement entre l'armature de carcasse (7) et la bande de roulement (3). L'armature de carcasse (7) est de manière connue constituée d'au moins une nappe de caoutchouc renforcée par des câblés textiles dits "radiaux", disposés pratiquement parallèles les uns aux autres et s'étendent d'un bourrelet à l'autre de manière à former un angle généralement compris entre 80° et 90° avec le plan circonférentiel médian M ; elle est ici, à titre d'exemple, enroulée autour de deux tringles (6) dans chaque bourrelet (5), le retournement (8) de cette armature (7) étant par exemple disposé vers l'extérieur du pneumatique (1) qui est ici représenté monté sur sa jante (9).

Selon la présente invention, conformément aux représentations des figures 2 et 3 qui seront détaillées ultérieurement, la ceinture (10) du pneumatique (1) comporte un stratifié composite multicouche comportant trois couches (10a, 10b, 10c) superposées de renforts, lesdits renforts étant dans chaque couche unidirectionnels et noyés dans une épaisseur de caoutchouc (respectivement C1, C2, C3), avec :
∘ côté bande de roulement, une première couche (10a) de caoutchouc (C1) comportant une première rangée de renforts (110), orientés selon un angle alpha de -5 à +5 degrés par rapport à la direction circonférentielle (X), ces renforts (110) dits premiers renforts étant en matériau textile thermorétractile ;
∘ au contact de la première couche (10b) et disposée sous cette dernière, une deuxième couche (10b) de caoutchouc (C2) comportant une deuxième rangée de renforts (120), orientés selon un angle beta donné, positif ou négatif, compris entre 10 et 30 degrés par rapport à la direction circonférentielle (X), ces renforts (120) dits deuxièmes renforts étant des renforts métalliques ;
∘ au contact de la deuxième couche (10b) et disposée sous cette dernière, une troisième couche (10c) de caoutchouc (C3) comportant une troisième rangée de renforts (130), orientés selon un angle gamma opposé à l'angle beta, lui-même compris entre 10 et 30 degrés par rapport à la direction circonférentielle (X), identique à ou différent de l'angle beta, ces renforts (130) dits troisièmes renforts étant des renforts métalliques.

Selon l'invention, les angles β et γ de sens opposés, tous deux compris entre 10° et 30°, peuvent être identiques ou différents, c'est-à-dire que les deuxièmes (120) et troisièmes (130) renforts peuvent être disposés symétriquement ou pas, de part et d'autre du plan circonférentiel médian (M) précédemment défini.

Dans ce pneumatique schématisé à la figure 1, on comprendra bien entendu que la bande de roulement (3), le stratifié multicouche (10) et l'armature de carcasse (7) peuvent être ou non au contact les uns des autres, même si ces parties ont été volontairement séparées sur la figure 1, schématiquement, pour des raisons de simplification et de clarté du dessin. Elles pourraient être séparées physiquement, tout au moins pour une partie d'entre elles, par exemple par des gommes de liaison, bien connues de l'homme du métier, destinées à optimiser la cohésion de l'ensemble après cuisson ou réticulation.

Selon une première caractéristique essentielle de l'invention, les premiers renforts (110) en matériau textile thermorétractile sont des monofils ou des assemblages de monofils, de tels mono fils pris individuellement ayant un diamètre (ou, par définition, une épaisseur si le monofilament n'a pas une section droite sensiblement circulaire) noté ϕ qui est supérieur à 0,10 mm, de préférence compris entre 0,15 et 0,80 mm, en particulier entre 0,20 et 0,60 mm.

Le diamètre d'encombrement (moyen) D1 de ces premiers renforts textiles (110) est quant à lui compris entre 0,20 mm et 1,20 mm, de préférence entre 0,30 et 1,00 mm, en particulier entre 0,40 et 0,80 mm ; en d'autres termes, dans le cas particulier où le renfort (110) consiste en un monofilament textile unitaire de section droite circulaire, ce dernier a un diamètre ϕ qui est nécessairement supérieur à 0,20 mm. On entend de manière usuelle par diamètre d'encombrement le diamètre du cylindre de révolution imaginaire qui entoure de tels premiers renforts textiles (110) dans le cas général où ces derniers ne sont pas à section droite circulaire.

Tout matériau textile thermorétractile convient, en particulier et préférentiellement un matériau textile vérifiant les caractéristiques de contraction CT énoncées ci-après convient.

De préférence, ce matériau textile thermorétractile est choisi dans le groupe constitué par les polyamides, les polyesters et les polycétones. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Sont également utilisables, en particulier et préférentiellement dans la mesure où ils vérifient la caractéristique CT préconisée ci-dessus, des renforts hybrides constitués de deux (au moins deux) matériaux différents tels que par exemple des assemblages de monofilaments aramide/nylon, aramide/polyester, aramide/polycétone.

Plus préférentiellement, le matériau textile thermorétractile constitutif des premiers renforts (110) est un polyamide (nylon) ou un polyester.

La densité d₁ des premiers renforts (110) dans la première couche de caoutchouc (C1), mesurée dans la direction axiale (Y), est de préférence comprise entre 70 et 130 fils/dm, plus préférentiellement comprise entre 80 et 120 fils/dm, en particulier entre 90 et 110 fils/dm.

Leur contraction thermique (notée CT), après 2 min à 185°C, est de préférence inférieure à 7,5%, plus préférentiellement inférieure à 7,0%, en particulier inférieure à 6,0%, valeurs qui se sont révélées préférables pour la stabilité de fabrication et de dimensionnement des enveloppes de pneumatiques, en particulier lors des phases de cuisson et refroidissement des ces dernières.

Il s'agit de la contraction relative de ces premiers renforts (110) dans les conditions énoncées ci-après du test. La grandeur CT est mesurée, sauf précisions différentes, selon la norme ASTM D1204-08, par exemple sur un appareil du type « TESTRITE », sous une prétension dite standard de 0,5 cN/tex (donc ramenée au titre ou densité linéique de l'échantillon testé). A longueur constante, on mesure également le maximum de la force de contraction (notée F_{C}) à l'aide du test ci-dessus, cette fois à une température de 180°C et sous 3% d'élongation. Cette force de contraction F_{C} est préférentiellement supérieure à 20 N (Newton). Une force de contraction élevée s'est révélée particulièrement favorable à la capacité de frettage des premiers renforts (110) en matériau textile thermorétractile, vis-à-vis de l'armature de sommet du pneumatique lorsque ce dernier s'échauffe sous une haute vitesse de roulage.

Les grandeurs CT et F_{C} ci-dessus peuvent être indistinctement mesurées sur les renforts textiles initiaux encollés avant leur incorporation dans le stratifié puis dans le pneu, ou bien mesurée sur ces renforts une fois extraits de la zone centrale du pneumatique vulcanisé et de préférence « dégommés » (c'est-à-dire débarrassés du caoutchouc qui les enrobe dans la couche C1).

La figure 4 schématise en coupe transversale, différents exemples (112, 113, 114, 115, 116, 117) d'assemblages de (respectivement 2, 3, 4, 5, 6 et 7) monofils (111) en matériau textile thermorétractile tel que par exemple polyamide, polyester ou polycétone, utilisables comme renforts (110) dans la première couche (10a) du stratifié composite multicouche selon l'invention.

De tels assemblages et leurs procédés de fabrication sont bien connus de l'homme du métier ; ils ont été décrits dans de nombreux documents brevet, à titre d'exemples FR 1 495 730, FR 2 022 643 ou US 3 638 706, FR 2 577 478 ou US 4 724 881, EP 500 480 ou US 5 442 903. EP 517 870 ou US 5 427 165, WO 2010/143017, ou dans des publications telles que « Investigation of twisted monofilament cordproperties made ofnylon 6.6 and polyester », B. Yilmaz, Fibers and Polymers 2011, vol. 12, N°8, 1091-1098.

Les monofils ou assemblages de monofils textiles thermorétractiles présentent l'avantage, comparativement à des cordes textiles formées de fibres multifilamentaires conventionnelles, de mieux protéger contre l'humidité le reste du stratifié composite multicouche, ainsi de limiter les risques de pénaliser l'adhésion entre les divers renforts du stratifié et leur matrice de caoutchouc environnante, sans compter les risques de corrosion des renforts en acier.

Si des assemblages de monofils textiles sont utilisés, ils comportent de préférence 2 à 10, plus préférentiellement de 3 à 7 monofils en matériau textile thermorétractile tel que par exemple polyamide, polyester ou polycétone. Pour la fabrication de ces assemblages, les monofils sont câblés, retordus ensemble selon des techniques bien connues, avec une torsion comprise de préférence entre 30 et 200 tr/m (tours par mètre), plus préférentiellement entre 30 et 100 tr/m, ces monofils étant de manière connue dépourvus, ou quasiment dépourvus, de torsion sur eux-mêmes.

De préférence, les monofilaments ou assemblages de monofilaments en matériau textile thermorétractile représentent la majorité (par définition, majorité en nombre), plus préférentiellement la totalité, des premiers (110) renforts de la première couche (10a) de caoutchouc (C1).

Dans le pneu de l'invention, tout ou partie des deuxièmes renforts (120) sont des câbles en acier constitués de 2 à 5 monofilaments, ces monofilaments n'étant donc pas utilisés à l'état unitaire mais assemblés (tordus, câblés) ensemble ; le diamètre de ces câbles, noté D2, est compris entre 0,20 mm et 0,70 mm.

Par diamètre du câble d'acier, on entend bien entendu, de manière usuelle, le diamètre du cercle circonscrivant sa section droite (ou diamètre d'encombrement), comme illustré aux figures 2 et 3 (Fig. 2b et 3b) ; par exemple, pour deux monofils de diamètre individuel 0,30 mm, le diamètre du câble 1x2, dans le cas d'une compacité maximale, est donc de 0,60 mm.

Plus préférentiellement, pour une endurance optimale du pneu de l'invention, notamment sous des conditions de roulage sévères, on préfère que D2 soit supérieur à 0,25 mm et inférieur à 0,60 mm, en particulier compris dans un domaine de 0,30 à 0,55 mm.

La densité, notée d₂, des deuxièmes (120) renforts dans la deuxième (C2) couche de caoutchouc, mesurée dans la direction axiale (Y), est comprise de préférence entre 75 et 200 fils/dm, plus préférentiellement entre 80 et 160 fils/dm, en particulier entre 120 et 160 fils/dm.

Selon un mode de réalisation préférentiel, le nombre de monofils dans les câbles en acier constituant les deuxième et/ou troisième (plus préférentiellement deuxième et troisième) renforts est compris dans un domaine de 2 à 4, plus préférentiellement égal à 2 ou 3.

Les monofils en acier constitutifs des câbles présentent un diamètre (élémentaire) compris de préférence entre 0,10 mm et 0,40 mm, plus préférentiellement dans un domaine de 0,15 à 0,35 mm, en particulier de 0,15 à 0,30 mm, étant entendu que le diamètre (D2) du câble utilisé reste dans tous les cas supérieur à 0,20 mm et inférieur à 0,70 mm.

Plus préférentiellement, ces câbles ou assemblages en acier ont pour construction 1x2, 1x3, 1x4, 2+1, 2+2.

Un mode de réalisation particulièrement préféré consiste à utiliser des câbles de construction 1x2, constitués de seulement deux monofils, par exemple des monofils de diamètre élémentaire de 0,15 à 0,30 mm. Un autre mode de réalisation peut consister à utiliser des câbles de construction 1x3 ou 2+1, constitués de trois monofils, par exemple des monofils de diamètre élémentaire de 0,15 à 0,30 mm.

De tels câbles d'acier à nombre de monofils et diamètre réduits sont bien connus de l'homme du métier dans le domaine du pneumatique. Ils peuvent être assemblés, câblés en une seule opération d'assemblage ou câblage, comme c'est le cas des câbles de construction 1x2, 1x3 ou 1x4, ou en deux opérations distinctes comme c'est le cas des câbles de construction 2+1 ou 2+2.

Préférentiellement, les câbles en acier représentent la majorité, de préférence la totalité, des deuxièmes renforts (120) de la deuxième couche (10b) de caoutchouc (C2).

Les troisièmes (130) renforts consistent pour tout ou partie en des mono filaments en acier, ces monofilaments, pour rappel, n'étant pas tordus, câblés ensemble mais utilisés à l'état unitaire ; leur diamètre (ou par définition l'épaisseur si le monofilament n'a pas une section droite circulaire), noté D3, est compris dans un domaine de 0,15 à 0,50 mm. De préférence, pour une endurance optimale du pneu de l'invention, notamment sous des conditions de roulage sévères, on préfère que D3 soit compris dans un domaine de 0,15 à 0,40 mm, plus préférentiellement compris dans un domaine de 0,20 à 0,35 mm.

La densité notée d₃ des troisièmes (130) renforts dans la troisième couche (C3) de caoutchouc, mesurée dans la direction axiale (Y), est de préférence comprise entre 100 et 180 fils/dm, plus préférentiellement entre 110 et 170 fils/dm, en particulier entre 120 et 160 fils/dm.

Préférentiellement, les monofils unitaires en acier représentent la majorité, plus préférentiellement la totalité, des troisièmes renforts (130) de la troisième couche (10c) de caoutchouc (C3).

De préférence, l'acier des deuxièmes et troisièmes renforts (120, 130) est un acier au carbone tel que ceux utilisés dans les câbles type "*steel cords*" pour pneumatiques ; mais il est bien entendu possible d'utiliser d'autres aciers, par exemple des aciers inoxydables, ou d'autres alliages.

Selon un mode de réalisation préférentiel, lorsqu'un acier au carbone est utilisé, sa teneur en carbone (% en poids d'acier) est comprise dans un domaine de 0,5% à 1,2%, plus préférentiellement de 0,7% à 1,0%. L'invention s'applique en particulier à des aciers du type *steel cord* à résistance normale (dit "NT" pour "*Normal Tensile*") ou à haute résistance (dit "HT" pour "*High Tensile*"), les (deuxièmes et troisièmes) renforts en acier au carbone possédant alors une résistance en traction (Rm) qui est de préférence supérieure à 2000 MPa, plus préférentiellement supérieure à 2500 MPa. L'invention s'applique également à des aciers du type *steel cord* à très haute résistance (dit "SHT" pour "*Super High Tensile*"), ultra-haute résistance (dit "UHT" pour *"Ultra High Tensile"* ou "MT" pour *"Mega Tensile*"), les (deuxièmes et troisièmes) renforts en acier au carbone possédant alors une résistance en traction (Rm) qui est de préférence supérieure à 3000 MPa, plus préférentiellement supérieure à 3500 MPa. L'allongement total à la rupture (At) de ces renforts, somme de l'allongement élastique et de l'allongement plastique, est de préférence supérieur à 2,0%.

Pour ce qui concerne les renforts (deuxième et troisièmes) en acier, les mesures de force à la rupture, de résistance à la rupture notée Rm (en MPa) et d'allongement à la rupture noté At (allongement total en %) sont effectuées en traction selon la norme ISO 6892 de 1984.

L'acier utilisé, qu'il s'agisse en particulier d'un acier au carbone ou d'un acier inoxydable, peut être lui-même revêtu d'une couche métallique améliorant par exemple les propriétés de mise en œuvre du mono filament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Chaque couche (C1, C2, C3) de composition de caoutchouc (ou ci-après "couche de caoutchouc") constitutive du stratifié composite multicouche, est à base d'au moins un élastomère et une charge.

De préférence, le caoutchouc est un caoutchouc diénique, c'est-à-dire pour rappel tout élastomère (élastomère unique ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.

Cet élastomère diénique est choisi plus préférentiellement dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

Chaque composition de caoutchouc peut comporter un seul ou plusieurs élastomère(s) diénique(s), également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en œuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment des sels de cobalt, de nickel ou de lanthanide, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 m²/g, de préférence de 30 à 400 m²/g.

L'homme de l'art saura, à la lumière de la présente description, ajuster la formulation des compositions de caoutchouc afin d'atteindre les niveaux de propriétés (notamment module d'élasticité) souhaités, et adapter la formulation à l'application spécifique envisagée.

De préférence, chaque composition de caoutchouc présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Pour faire adhérer les premiers, deuxièmes et troisièmes renforts à leurs trois couches de caoutchouc respectives (C1, C2, C3) précédemment décrites, on pourra utiliser tout système adhésif approprié, par exemple une colle textile du type "RFL" (résorcinol-formaldéhyde-latex) ou équivalente pour ce qui concerne les premiers renforts textiles, ou par exemple un revêtement adhésif tel que du laiton ou du zinc pour ce qui concerne les deuxièmes et troisièmes renforts en acier ; toutefois, on peut aussi utiliser un acier clair, c'est-à-dire non revêtu.

D'autre part, les caractéristiques préférentielles suivantes, mesurées dans la partie centrale de la ceinture du pneumatique à l'état vulcanisé, de part et d'autre du plan médian (M) sur une largeur axiale totale de 10 cm, sont vérifiées :
- l'épaisseur moyenne Ez₁ de caoutchouc séparant un premier renfort (110) du deuxième renfort (120) qui lui est le plus proche, mesurée dans la direction radiale (Z), est inférieure à 0,40 mm ;
- l'épaisseur moyenne Ez₂ de caoutchouc séparant un deuxième renfort (120) du troisième renfort (130) qui lui est le plus proche, mesurée dans la direction radiale (Z), est inférieure à 0,60 mm.

Selon un mode de réalisation plus préférentiel de l'invention, au moins une des caractéristiques suivantes est vérifiée (encore plus préférentiellement la totalité) :
- Ez₁ est comprise entre 0,15 et 0,40 mm ;
- Ez₂ est comprise entre 0,15 et 0,60 mm ;
- l'épaisseur totale du stratifié composite multicouche, c'est-à-dire de ses trois couches (C1, C2, C3) superposées, mesurée selon la direction radiale Z, est comprise entre 1,8 et 2,7 mm.

Toutes les données indiquées précédemment (D1, D2, D3, d₁, d₂, d₃, Ez₁, Ez₂ et épaisseur totale) sont des valeurs moyennes mesurées expérimentalement par un opérateur sur des photographies de coupes radiales de pneus vulcanisés, opérées dans la partie centrale de la ceinture, 5 cm de part et d'autre du plan médian (M), soit sur une largeur totale de 10 cm (soit entre - 5 cm et + 5 cm par rapport au plan médian M).

Les figures 2 et 3 représentent de manière schématique (sans respect d'une échelle spécifique), en coupe transversale, deux exemples de stratifié composite multicouche (10a, 10b, 10c) utilisé comme ceinture (10) dans le pneu (1) conforme à l'invention de la figure 1, le stratifié (10) utilisant dans la première couche (C1) des renforts (110) en matériau textile thermorétractile respectivement sous la forme d'un assemblage de trois monofilaments (Fig. 2) ou d'un simple monofilament unitaire (Fig. 3), dans la deuxième couche (C2) de petits câbles en acier (120) respectivement sous la forme d'un câble de 2 monofils en acier de construction 1x2 (Fig. 2) ou d'un câble de 3 monofils de construction 1x3 (Fig. 3), enfin dans les deux cas dans la troisième couche (C3) des monofilaments en acier unitaires (Fig. 2 et 3).

Comme illustré aux figures 2 et 3, Ez₁ est la moyenne des épaisseurs (Ez₁₍₁₎, Ez₁₍₂₎, Ez₁₍₃₎, ..., Ez₁₍ᵢ₎) de caoutchouc séparant un premier renfort (110) du deuxième renfort (120) qui lui est le plus proche, ces épaisseurs étant chacune mesurées dans la direction radiale Z, et moyennées sur une distance axiale totale comprise entre - 5,0 cm et + 5,0 cm par rapport au centre de la ceinture (soit, par exemple au total environ 100 mesures si l'on trouve dix renforts (110) par cm dans la couche C1).

Exprimé autrement, Ez₁ est la moyenne des distances minimales Ez₁₍ᵢ₎ séparant « dos à dos » chaque premier renfort (110) du deuxième renfort (120) qui lui est le plus proche dans la direction radiale Z, cette moyenne étant calculée sur l'ensemble des premiers renforts (110) présents dans la partie centrale de la ceinture, dans un intervalle axial s'étendant entre - 5 cm et + 5 cm par rapport au plan médian M.

De même, Ez₂ est la moyenne des épaisseurs de caoutchouc (Ez₂₍₁₎, Ez₂₍₂₎, Ez₂₍₃₎, ..., Ez₂₍ᵢ₎) séparant un deuxième renfort (120) du troisième renfort (130) qui lui est le plus proche, mesurées dans la direction radiale Z, cette moyenne étant calculée sur une distance axiale totale comprise entre - 5,0 cm et + 5,0 cm par rapport au centre de la ceinture. Exprimé différemment, ces épaisseurs représentent les distances minimales qui séparent « dos à dos » le deuxième renfort (120) du troisième renfort (130) qui lui est le plus proche dans la direction radiale Z.

Exprimé différemment, Ez₂ est la moyenne des distances minimales Ez₂₍ᵢ₎ séparant « dos à dos » chaque deuxième renfort (120) du troisième renfort (130) qui lui est le plus proche dans la direction radiale Z, cette moyenne étant calculée sur l'ensemble des deuxièmes renforts (120) présents dans la partie centrale de la ceinture, dans un intervalle axial s'étendant entre - 5 cm et + 5 cm par rapport au plan médian M.

Pour une performance optimisée en termes de résistance au roulement, poussée de dérive et endurance au roulage, le pneu de l'invention vérifie préférentiellement au moins une des inégalités suivantes (plus préférentiellement les trois) :
0,10 < Ez₁ / (Ez₁ + D1 + D2) < 0,40
0,10 < Ez₂ / (Ez₂ + D2 + D3) < 0,50
0,10 < (Ez₁ + Ez₂) / (Ez₁ + Ez₂ + D1 + D2 + D3) < 0,40.

Plus préférentiellement encore, le pneu de l'invention vérifie préférentiellement au moins une des inégalités suivantes (plus préférentiellement les trois):
0,15 < Ez₁ / (Ez₁ + D1 + D2) < 0,35
0,15 < Ez₂ / (Ez₂ + D2 + D3) < 0,45
0,15 < (Ez₁ + Ez₂) / (Ez₁ + Ez₂ + D1 + D2 + D3) < 0,35.

En conclusion, l'invention offre la possibilité de réduire l'épaisseur des stratifiés composites multicouche formant les ceintures de pneumatiques, sans risquer de nuire à leur endurance sous extension et/ou compression, ceci grâce à l'emploi dans ces stratifiés de renforts tels que définis précédemment, à savoir dans la première couche (C1) de monofils ou assemblages de monofils textiles thermorétractiles, dans la deuxième couche (C2) de petits câbles en acier, enfin dans la troisième couche (C3) de monofils unitaires en acier.

## Revendications

1. Pneumatique radial (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) jusqu'au sommet (2), une armature de sommet ou ceinture (10) s'étendant dans le sommet (2) selon la direction circonférentielle (X) et situé radialement entre l'armature de carcasse (7) et la bande de roulement (3), ladite ceinture (10) comportant un stratifié composite multicouche (10a, 10b, 10c) comportant au moins trois couches superposées de renforts (110, 120, 130), lesdits renforts étant dans chaque couche unidirectionnels et noyés dans une épaisseur de caoutchouc (respectivement C1, C2, C3), avec :
∘ côté bande de roulement, une première couche (10a) de caoutchouc (C1) comportant une première rangée de renforts (110), orientés selon un angle alpha de -5 à +5 degrés par rapport à la direction circonférentielle (X), ces renforts (110) dits premiers renforts étant en matériau textile thermorétractile ;
∘ au contact de la première couche (10b) et disposée sous cette dernière, une deuxième couche (10b) de caoutchouc (C2) comportant une deuxième rangée de renforts (120), orientés selon un angle beta donné, positif ou négatif, compris entre 10 et 30 degrés par rapport à la direction circonférentielle (X), ces renforts (120) dits deuxièmes renforts étant des renforts métalliques ;
∘ au contact de la deuxième couche (10b) et disposée sous cette dernière, une troisième couche (10c) de caoutchouc (C3) comportant une troisième rangée de renforts (130), orientés selon un angle gamma opposé à l'angle beta, lui-même compris entre 10 et 30 degrés par rapport à la direction circonférentielle (X), ces renforts (130) dits troisièmes renforts étant des renforts métalliques,
**caractérisé en ce que** :
∘ tout ou partie des premiers renforts (110) en matériau textile thermorétractile sont des mono filaments de diamètre ou épaisseur ϕ supérieur(e) à 0,10 mm, ou des assemblages de tels mono filaments ;
∘ le diamètre d'encombrement noté D1 des premiers renforts (110) est compris entre 0,20 mm et 1,20 mm ;
∘ tout ou partie des deuxièmes (120) renforts sont des câbles en acier constitués de 2 à 5 mono filaments, le diamètre de ces câbles noté D2 étant compris entre 0,20 mm et 0,70 mm ;
∘ tout ou partie des troisièmes (130) renforts sont des mono fils en acier dont le diamètre ou épaisseur noté(e) D3 est compris(e) dans un domaine de 0,15 à 0,50 mm.

2. Pneumatique selon la revendication 1, dans lequel la densité d₁ des premiers renforts (110) dans la première couche de caoutchouc (C1), mesurée dans la direction radiale (Y), est comprise entre 70 et 130 fils/dm.

3. Pneumatique selon l'une quelconque des revendications 1 à 2, dans lequel le matériau textile thermorétractile est un polyamide ou un polyester.

4. Pneumatique selon l'une quelconque des revendications 1 à 3, dans lequel les premiers renforts (110) en matériau textile thermorétractile sont des assemblages de 2 à 10, de préférence de 3 à 7 mono filaments.

5. Pneumatique selon l'une quelconque des revendications 1 à 4, dans lequel la densité, notée d₂ des deuxièmes (120) renforts dans la deuxième couche (C2) de caoutchouc, mesurée dans la direction axiale (Y), est comprise entre 75 et 200 fils/dm, de préférence entre 80 et 160 fils/dm.

6. Pneumatique selon l'une quelconque des revendications 1 à 5, dans lequel le nombre de monofilaments dans les câbles en acier constituant les deuxièmes (120) renforts est compris dans un domaine de 2 à 4, de préférence égal à 2 ou 3.

7. Pneumatique selon la revendication 6, dans lequel les câbles en acier ont pour construction 1x2, 1x3, 1x4, 2+1, 2+2.

8. Pneumatique selon la revendication 7, dans lequel les câbles en acier ont pour construction 1x2.

9. Pneumatique selon l'une quelconque des revendications 1 à 8, dans lequel la densité notée d₃ des troisièmes (130) renforts dans la troisième couche (C3) de caoutchouc, mesurée dans la direction axiale (Y), est comprise entre 100 et 180 fils/dm.

10. Pneumatique selon la revendication 9, dans lequel la densité d₃ est comprise entre 110 et 170, de préférence entre 120 et 160 fils/dm.

11. Pneumatique selon l'une quelconque des revendications 1 à 10, dans lequel la caractéristique suivante, mesurée dans la partie centrale de la ceinture du pneumatique à l'état vulcanisé, de part et d'autre du plan médian (M) sur une largeur axiale totale de 10 cm, est vérifiée :
- l'épaisseur moyenne Ez₁ de caoutchouc séparant un premier renfort (110) du deuxième renfort (120) qui lui est le plus proche, mesurée dans la direction radiale (Z), est inférieure à 0,40 mm, de préférence comprise entre 0,15 et 0,40 mm.

12. Pneumatique selon l'une quelconque des revendications 1 à 11, dans lequel la caractéristique suivante, mesurée dans la partie centrale de la ceinture du pneumatique à l'état vulcanisé, de part et d'autre du plan médian (M) sur une largeur axiale totale de 10 cm, est vérifiée :
- l'épaisseur moyenne Ez₂ de caoutchouc séparant un deuxième renfort (120) du troisième renfort (130) qui lui est le plus proche, mesurée dans la direction radiale (Z), est inférieure à 0,60 mm, de préférence comprise entre 0,15 et 0,60 mm.

13. Pneumatique selon la revendication 11, dans lequel l'inégalité suivante est vérifiée :
0,10 < Ez₁ / (Ez₁ + D1 + D2) < 0,40

14. Pneumatique selon la revendication 12 ou une combinaison des revendications 12 et 13, dans lequel l'inégalité suivante est vérifiée :
0,10 < Ez₂ / (Ez₂ + D2 + D3) < 0,50

15. Pneumatique selon l'une quelconque des revendications 11 et 12 ou une combinaison des revendications 11-13 ou 11, 12 et 14, dans lequel l'inégalité suivante est vérifiée :
0,10 < (Ez₁ + Ez₂) / (Ez₁ + Ez₂ + D1 + D2 + D3) < 0,40.

## Patentansprüche

1. Radialreifen (1), welcher drei Hauptrichtungen, nämlich über den Umfang (X), axial (Y) und radial (Z), definiert, aufweisend einen Scheitel (2), welcher von einer Reifenlauffläche (3) überdeckt wird, zwei Flanken (4), zwei Wülste (5), wobei jede Flanke (4) jeden Wulst (5) mit dem Scheitel (2) verbindet, eine Karkassenbewehrung (7), die in den beiden Wülsten (5) verankert ist und sich in den Flanken (4) bis zu dem Scheitel (2) erstreckt, eine Scheitel- oder Gürtelbewehrung (10), welche sich in dem Scheitel (2) gemäß der Umfangsrichtung (X) erstreckt und radial zwischen der Karkassenbewehrung (7) und der Reifenlauffläche (3) angeordnet ist, wobei der Gürtel (10) ein mehrschichtiges Verbundlaminat (10a, 10b, 10c) aufweist, welches mindestens drei übereinander gelegte Verstärkungsschichten (110, 120, 130) aufweist, wobei die Verstärkungen in jeder Schicht unidirektional und in einer Kautschuklage (jeweils C1, C2, C3) eingelassen sind, mit:
- einer ersten Schicht (10a) aus Kautschuk (C1) auf der Seite der Reifenlauffläche, welche eine erste Reihe von Verstärkungen (110) aufweist, welche gemäß einem Winkel Alpha von -5 bis +5 Grad in Bezug auf die Umfangsrichtung (X) ausgerichtet sind, wobei diese Verstärkungen (110), so genannte erste Verstärkungen, aus wärmeschrumpfendem textilen Material bestehen;
- einer mit der ersten Schicht (10b) in Kontakt stehenden und unter letzterer angeordneten zweiten Schicht (10b) aus Kautschuk (C2), welche eine zweite Reihe von Verstärkungen (120) aufweist, welche gemäß einem gegebenen positiven oder negativen Winkel Beta, der zwischen 10 und 30 Grad in Bezug auf die Umfangsrichtung (X) liegt, ausgerichtet sind, wobei diese Verstärkungen (120), so genannte zweite Verstärkungen, metallische Verstärkungen sind;
- einer mit der zweiten Schicht (10b) in Kontakt stehenden und unter letzterer angeordneten dritten Schicht (10c) aus Kautschuk (C3), welche eine dritte Reihe von Verstärkungen (130) aufweist, welche gemäß einem dem Winkel Beta entgegengesetzten Winkel Gamma, welcher selbst zwischen 10 und 30 Grad in Bezug auf die Umfangsrichtung (X) liegt, ausgerichtet sind, wobei diese Verstärkungen (130), so genannte dritte Verstärkungen, metallische Verstärkungen sind;
**dadurch gekennzeichnet, dass**:
- sämtliche oder ein Teil der ersten Verstärkungen (110) aus wärmeschrumpfendem textilen Material Monofilamente, welche einen Durchmesser oder eine Dicke ϕ aufweisen, der bzw. die größer als 0,10 mm ist, oder Zusammenfügungen solcher Monofilamente sind;
- der mit D1 bezeichnete Abmessungsdurchmesser der ersten Verstärkungen (110) zwischen 0,20 mm und 1,20 mm liegt;
- sämtliche oder ein Teil der zweiten (120) Verstärkungen Stahlkabel sind, die aus 2 bis 5 Monofilamenten gebildet sind, wobei der Durchmesser dieser mit D2 bezeichneten Kabel zwischen 0,20 mm und 0,70 mm liegt;
- sämtliche oder ein Teil der dritten (130) Verstärkungen Monofile aus Stahl sind, deren mit D3 bezeichnete(r) Durchmesser oder Dicke in einem Bereich von 0,15 bis 0,50 mm liegt.

2. Reifen nach Anspruch 1, bei welchem die Dichte d₁ der ersten Verstärkungen (110) in der ersten Schicht aus Kautschuk (C1), welche in der radialen Richtung (Y) gemessen wird, zwischen 70 und 130 Fäden/dm liegt.

3. Reifen nach einem der Ansprüche 1 bis 2, bei welchem das wärmeschrumpfende textile Material ein Polyamid oder ein Polyester ist.

4. Reifen nach einem der Ansprüche 1 bis 3, bei welchem die ersten Verstärkungen (110) aus wärmeschrumpfendem textilen Material Zusammenfügungen aus 2 bis 10, vorzugsweise 3 bis 7, Monofilamenten sind.

5. Reifen nach einem der Ansprüche 1 bis 4, wobei die mit d₂ bezeichnete Dichte der zweiten (120) Verstärkungen in der zweiten Schicht (C2) aus Kautschuk, welche in der axialen Richtung (Y) gemessen wird, zwischen 75 und 200 Fäden/dm, vorzugsweise zwischen 80 und 160 Fäden/dm, liegt.

6. Reifen nach einem der Ansprüche 1 bis 5, wobei die Anzahl von Monofilamenten in den Stahlkabeln, die die zweiten (120) Verstärkungen bilden, in einem Bereich von 2 bis 4 liegt und vorzugsweise gleich 2 oder 3 ist.

7. Reifen nach Anspruch 6, wobei die Stahlkabel einen 1x2-, 1x3-, 1x4-, 2+1-, 2+2-Aufbau haben.

8. Reifen nach Anspruch 7, wobei die Stahlseile einen 1x2-Aufbau haben.

9. Reifen nach einem der Ansprüche 1 bis 8, bei welchem die mit d₃ bezeichnete Dichte der dritten (130) Verstärkungen in der dritten Schicht (C3) aus Kautschuk, welche in der axialen Richtung (Y) gemessen wird, zwischen 100 und 180 Fäden/dm liegt.

10. Reifen nach Anspruch 9, bei welchem die Dichte d₃ zwischen 110 und 170, vorzugsweise zwischen 120 und 160, Fäden/dm liegt.

11. Reifen nach einem der Ansprüche 1 bis 10, bei welchem das folgende Merkmal, welches im zentralen Abschnitt des Gürtels des Reifens im vulkanisierten Zustand beiderseits der Mittelebene (M) über eine gesamte axiale Breite von 10 cm gemessen wird, erfüllt ist:
- die mittlere Dicke Ez₁ aus Kautschuk, welche eine erste Verstärkung (110) von der zweiten Verstärkung (120), die ihr am nächsten ist, trennt, ist kleiner als 0,40 mm, liegt vorzugsweise zwischen 0,15 und 0,40 mm, wenn sie in der radialen Richtung (Z) gemessen wird.

12. Reifen nach einem der Ansprüche 1 bis 11, bei welchem das folgende Merkmal, welches im zentralen Abschnitt des Gürtels des Reifens im vulkanisierten Zustand beiderseits der Mittelebene (M) über eine gesamte axiale Breite von 10 cm gemessen wird, erfüllt ist:
- die mittlere Dicke Ez₂ aus Kautschuk, welche eine zweite Verstärkung (120) von der dritten Verstärkung (130), die ihr am nächsten ist, trennt, ist kleiner als 0,60 mm, liegt vorzugsweise zwischen 0,15 und 0,60 mm, wenn sie in der radialen Richtung (Z) gemessen wird.

13. Reifen nach Anspruch 11, bei welchem die folgende Ungleichung erfüllt ist:
0,10 < Ez₁ / (Ez₁ + D1 + D2) < 0,40

14. Reifen nach Anspruch 12 oder einer Kombination der Ansprüche 12 und 13, bei welchem die folgende Ungleichung erfüllt ist:
0,10 < Ez₂ / (Ez₂ + D2 + D3) < 0,50

15. Reifen nach einem der Ansprüche 11 und 12 oder einer Kombination der Ansprüche 11-13 oder 11, 12 und 14, bei welchem die folgende Ungleichung erfüllt ist:
0,10 < (Ez₁ + Ez₂) / (Ez₁ + Ez₂ + D1+ D2 + D3) < 0,40

## Claims

1. Radial tyre (1), defining three main directions, circumferential (X), axial (Y) and radial (Z), comprising a crown (2) surmounted by a tread (3), two sidewalls (4), two beads (5), each sidewall (4) connecting each bead (5) to the crown (2), a carcass reinforcement (7) that is anchored in each of the beads (5) and extends in the sidewalls (4) to the crown (2), a crown reinforcement or belt (10) that extends in the crown (2) in the circumferential direction (X) and is situated radially between the carcass reinforcement (7) and the tread (3), the said belt (10) comprising a multilayer composite laminate (10a, 10b, 10c) comprising at least three superposed layers of reinforcers (110, 120, 130), the said reinforcers being unidirectional within each layer and embedded in a thickness of rubber (C1, C2, C3, respectively), with:
∘ on the tread side, a first layer (10a) of rubber (C1) comprising a first row of reinforcers (110) which are oriented at an angle alpha of -5 to +5 degrees with respect to the circumferential direction (X), these reinforcers (110), referred to as first reinforcers, being made of a heat-shrinkable textile material;
∘ in contact with the first layer (10b) and disposed beneath the latter, a second layer (10b) of rubber (C2) comprising a second row of reinforcers (120) which are oriented at a given angle beta, which is positive or negative, of between 10 and 30 degrees with respect to the circumferential direction (X), these reinforcers (120), referred to as second reinforcers, being metal reinforcers;
∘ in contact with the second layer (10b) and disposed beneath the latter, a third layer (10c) of rubber (C3) comprising a third row of reinforcers (130) which are oriented at an angle gamma the opposite of the angle beta, itself being between 10 and 30 degrees with respect to the circumferential direction (X), these reinforcers (130), referred to as third reinforcers, being metal reinforcers,
**characterized in that**
∘ all or some of the first reinforcers (110) made of heat-shrinkable textile material are monofilaments with a diameter or thickness φ greater than 0.10 mm, or assemblies of such monofilaments;
∘ the envelope diameter denoted D1 of the first reinforcers (110) is between 0.20 mm and 1.20 mm;
∘ all or some of the second (120) reinforcers are steel cords made up of 2 to 5 monofilaments, the diameter of these cords, denoted D2, being between 0.20 mm and 0.70 mm;
∘ all or some of the third (130) reinforcers are steel monofilaments, the diameter of these monofilaments, denoted D3, being between 0.15 mm and 0.50 mm.

2. Tyre according to Claim 1, in which the density d₁ of the first reinforcers (110) in the first layer of rubber (C1), measured in the axial direction (Y), is between 70 and 130 threads/dm.

3. Tyre according to any one of Claims 1 to 2, in which the heat-shrinkable textile material is a polyamide or a polyester.

4. Tyre according to any one of Claims 1 to 3, in which the first reinforcers (110) made of heat-shrinkable textile material are assemblies of 2 to 10, preferably 3 to 7 monofilaments.

5. Tyre according to any one of Claims 1 to 4, in which the density, d₂ of the second (120) reinforcers in the second (C2) layer of rubber, measured in the axial direction (Y), is between 75 and 200 threads/dm, preferably between 80 and 160 threads/dm.

6. Tyre according to any one of Claims 1 to 5, in which the number of monofilaments in the steel cords that constitute the second (120) reinforcers is in a range from 2 to 4, preferably equal to 2 or 3.

7. Tyre according to Claim 6, in which the steel cords have the construction 1x2, 1x3, 1x4, 2+1, 2+2.

8. Tyre according to Claim 7, in which the steel cords have the construction 1x2.

9. Tyre according to any one of Claims 1 to 8, in which the density d₃ of the third (130) reinforcers in the third (C3) layers of rubber, measured in the axial direction (Y), is between 100 and 180 threads/dm.

10. Tyre according to Claim 9, in which the density d₃ is between 110 and 170, preferably between 120 and 160 threads/dm.

11. Tyre according to any one of Claims 1 to 10, in which the following feature, measured in the central part of the belt of the tyre in the vulcanized state, on each side of the median plane (M) over a total axial width of 10 cm, is satisfied:
- the mean thickness Ez₁ of rubber separating a first reinforcer (110) from the second reinforcer (120) closest to it, measured in the radial direction (Z), is less than 0.4 mm, preferably between 0.15 and 0.40 mm.

12. Tyre according to any one of Claims 1 to 11, in which the following feature, measured in the central part of the belt of the tyre in the vulcanized state, on each side of the median plane (M) over a total axial width of 10 cm, is satisfied:
- the mean thickness Ez₂ of rubber separating a second reinforcer (120) from the third reinforcer (130) closest to it, measured in the radial direction (Z), is less than 0.60 mm, preferably between 0.15 and 0.60 mm.

13. Tyre according to Claim 11, in which the following inequality is satisfied:
0.10 < Ez₁ / (Ez₁ + D1 + D2) < 0.40.

14. Tyre according to Claim 12 or a combination of Claims 12 and 13, in which the following inequality is satisfied:
0.10 < Ez₂ / (Ez₂ + D2 + D3) < 0.50

15. Tyre according to any one of Claims 11 and 12 or a combination of Claims 11-13 or a combination of Claims 11, 12 and 14, in which the following inequality is satisfied:
0.10 < (Ez₁+Ez₂) / (Ez₁+Ez₂+D1+D2+ D3) < 0.40
